## Europäisches Patentamt
## European Patent Office
## Office européen des brevets

(11) Veröffentlichungsnummer : **0 117 491**
**B1**

(12) # EUROPÄISCHE PATENTSCHRIFT

(45) Veröffentlichungstag der Patentschrift :
**02.12.87**

(21) Anmeldenummer : **84101624.9**

(22) Anmeldetag : **16.02.84**

(51) Int. Cl.⁴ : **G 01 M   3/32,** G 01 M   3/36

(54) Verfahren zum Prüfen von Vakuumpackungen.

(30) Priorität : 23.02.83 DE 3306779
28.01.84 DE 3402940

(43) Veröffentlichungstag der Anmeldung :
**05.09.84 Patentblatt 84/36**

(45) Bekanntmachung des Hinweises auf die Patenterteilung : **02.12.87 Patentblatt 87/49**

(84) Benannte Vertragsstaaten :
**AT BE CH DE FR GB IT LI LU NL SE**

(56) Entgegenhaltungen :
**CH-A-   388 171**
**US-A- 3 800 586**
**US-A- 3 805 595**
**RESEARCH DISCLOSURE, Nr. 137, September 1975, Seite 19, Nr. 13722, Industrial Opportunities Ltd., Havant, Herts., GB; R.P. KOSTKA u.a.: "Apparatus for testing flexible plastic liners and probe caps"**

(73) Patentinhaber : **Kaatze, Michael**
**Kiefernweg 11**
**D-2117 Tostedt (DE)**

(72) Erfinder : **Kaatze, Michael**
**Kiefernweg 11**
**D-2117 Tostedt (DE)**

(74) Vertreter : **Holländer, Franz G. et al**
**Patentanwälte Holländer & Meyer Jungfernstieg 38**
**D-2000 Hamburg 36 (DE)**

EP 0 117 491 B1

## Beschreibung

Die Erfindung bezieht sich auf ein Verfahren zum Prüfen von Vakuumpackungen, jeweils bestehend aus einer bestimmten, im Vakuum mit einer Folie luftdicht umschlossenen Warenmenge auf Luftdichtigkeit der Umschließung, gemäß Oberbegriff des Patentanspruches 1.

Sogenannte Vakuumpackungen sind Packungen, in denen die Ware unter einem gegenüber der Atmosphäre verringerten Druck enthalten ist. Diese Art der Verpackung dient mehreren Zwecken. In erster Linie wird die zeitabhängige Veränderung des Packungsinhaltes verzögert, so daß der ursprüngliche Herstellungszustand, insbesondere das Herstellungsaroma, besser als bisher geschützt wird und länger erhalten bleibt. Gleichzeitig bieten derartige Packungen dem Käufer die Gewähr, daß er nur originalverpackte Ware erhält. Zusätzlich kann der Hersteller besser überwachen, ob die Packungen auf dem Weg von seinem Betrieb bis zur Übergabe an den Käufer einwandfrei gehandhabt werden.

Aus diesen Gründen haben sich solche Vakuumpackungen in den letzten Jahren besonders für Kaffee eingebürgert. Auch geröstete Erdnüsse und ähnliche Röst- und Backprodukte werden in solchen Packungen geliefert. Weitere Verwendungszwecke sind z. B. Tee und Tabak, deren Aroma bis zum Verbraucher besonders geschützt werden soll.

Bisher wird bei der Herstellung von Kaffee-Vakuumpackungen etwa jede 100. Packung ausgesondert, 48 Stunden lang gelagert und dann in ein Gerät eingespannt, in dem auf zwei parallele Seitenflächen der quaderförmigen Packung ein bestimmter mechanischer Druck ausgeübt wird. Dadurch werden weiche Packungen ermittelt, nämlich solche, bei denen die Umschließung der Packung Poren aufweist, die zu einer Störung des Vakuums führen, so daß die ursprünglich brikettartig harte Packung weich geworden ist. Derartige oder ähnliche Verfahren sind z. B. in der CH-PS 388 171 oder der DE-OS 1 808 507 beschrieben.

Aus der Uhrentechnik ist an sich bekannt, siehe « Zeitschrift für Instrumentenkunde », 1966, S. 145-149, Uhrgehäuse auf Gasdichtigkeit zu prüfen. Hierfür wird die Uhr in eine Meßkammer gelegt, die durch eine Membran von einer Vergleichskammer abgeteilt ist, wobei anfänglich in beiden Kammern der gleiche Druck herrscht und die durch die Membranverschiebung angezeigte Druckänderung pro Zeiteinheit gemessen wird. Diese bekannte Technik muß mit Präzisionsmessungen und genauer Fehlerbetrachtung arbeiten und liegt außerhalb des hier in Betracht zu ziehenden Bereiches der Massenverpackung sowie der Qualitätsprüfung in diesem Bereich.

Die bisher erforderliche Lagerung über etwa 48 Stunden ist zu lange für die neuzeitlichen Einrichtungen für Massenverpackungen, deren Leistung bei etwa 100 bis 150 Packungen pro Minute liegt.

Der Erfindung liegt die Aufgabe zugrunde, das aus der CH-PS 388 171 bekannte Prüfverfahren ganz erheblich zu verbessern und auch die Ermittlung kleiner Undichtigkeiten in einer Vakuumverpackung in kurzer Zeit zu ermöglichen. Zur Lösung dieser Aufgabe wird nach der Erfindung ein Verfahren gemäß Patentanspruch 1 geschaffen. Ausgestaltungen der Erfindung sind in den abhängigen Ansprüchen gekennzeichnet.

Die Erfindung ermöglicht demnach, das bisher in etwa 48 Stunden ablaufende Prüfverfahren erheblich abzukürzen. Es wird unmittelbar an den Verpackungsvorgang angeschlossen, so daß z. B. bei etwa 100 bis 120 Takten pro Minute und einer Dauer des Prüfvorganges von vorzugsweise weniger als 30 Sekunden, insbesondere etwa 15 bis 20 Sekunden, mindestens jede 60. Packung überprüft werden kann. Wird dabei eine fehlerhafte Packung festgestellt, können die in gleicher Weise fehlerhaften oder auch nur gefährdeten Packungen noch innerhalb des Herstellungsbetriebes angehalten und neu verpackt werden. Die Wahrscheinlichkeit, daß beim Testen z. B. jeder 60. oder gar 30. Packung danach überhaupt noch fehlerhafte Packungen ausgeliefert werden, ist auf diese Weise drastisch verringert.

In einer grundsätzlichen Ausführungsform des Verfahrens wird die bislang übliche Einwirkung von Atmosphärenluft durch eine wesentlich kürzere Einwirkung von Druckluft ersetzt und anschließend mit dem mechanischen Druckfühler die Festigkeit überprüft. In einer anderen Ausgestaltung kann stattdessen in einer Druckkammer der Druckabfall festgestellt werden, so daß die zusätzliche Überprüfung mit mechanischem Druck entfällt.

Die Erfindung wird nachstehend anhand von Ausführungsbeispielen näher erläutert. In der beigefügten Zeichnung zeigen

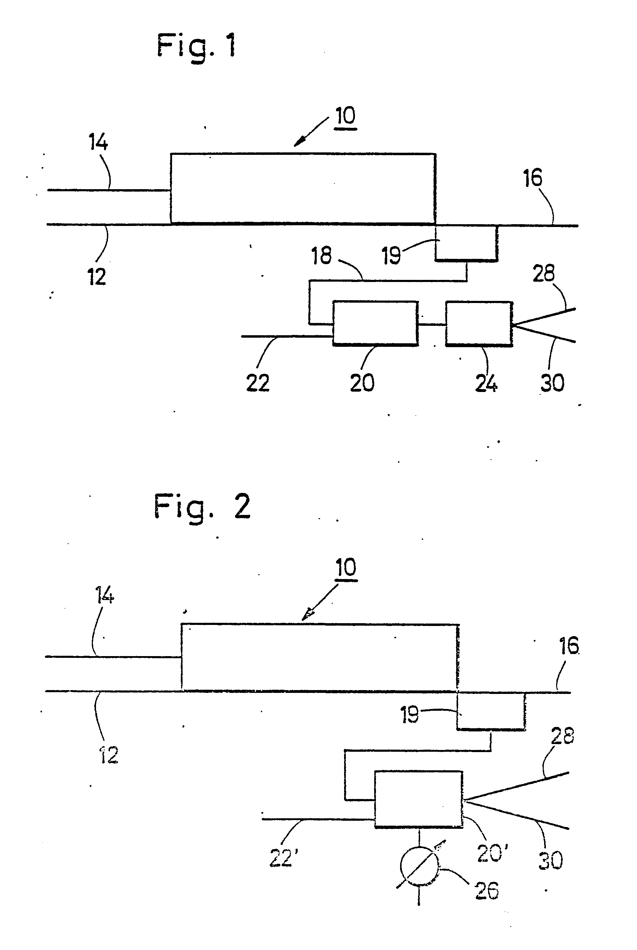

Fig. 1 und 2 schematisch zwei verschiedene Anordnungen zur Ausführung des Verfahrens.

In Fig. 1 ist schematisch eine Vakuumverpackungseinrichtung 10 dargestellt, in die über eine Fördereinrichtung 12 das zu verpackende Produkt, z. B. gemahlener Röstkaffee, eingeführt wird. Gleichzeitig wird auf einem Förderweg 14 das Verpackungsmaterial zugeführt, insbesondere eine Folie, die unter Wärmeeinwirkung luftdicht zusammenhaftet. Solche Heißsiegelfolien sind an sich bekannt und bestehen z. B. aus einer mit einer thermoplastischen Kunststoff-Folie kaschierten Folie aus einer Aluminiumlegierung.

Nach Herstellung der ziegelartigen Vakuumpackungen in der Einrichtung 10 werden diese auf einer weiteren Fördereinrichtung 16 abtransportiert, um zu größeren Gebinden zusammengefaßt zu werden. Unmittelbar am Ausgang der Einrichtung 10 wird mit einer zusätzlichen Einrichtung 19, die eine Einrichtung zum Zählen und zur Aussonderung umfaßt, z. B. jedes 100. Paket aus der Fördereinrichtung 16 herausgenommen und auf einem Weg 18 in eine Einrichtung 20 eingeführt, die einen abgeschlossenen Raum umfaßt, in der die ausgesonderte Packung mit einem Druckgas, vorzugsweise Druckluft, beaufschlagt wird. Dieses Druckgas wird von einer Quelle 22 zugeführt. Dieses Druckgas wirkt auf die im Raum 20 enthaltene Packung ein. Durch entsprechende Wahl des Druckes kann erreicht werden, daß innerhalb einer Verweilzeit von einer halben bis eineinhalb Stunden die Vakuumdichtigkeit der Packung im Raum 20 überprüft wird. Der Druck wird im Bereich von etwa 4 bis 25 Bar gewählt, vorzugsweise im Bereich von etwa 8 bis 16 Bar, wobei die Verweilzeit dann eine Minute nicht übersteigt.

Eine mechanische Prüfvorrichtung 24 ist der Druckkammer 20 angeschlossen. In dieser Einrichtung wird die Packung auf zwei parallelen Seiten einem mechanischen Druck ausgesetzt, der in bekannter Weise so gewählt ist, daß er bei einwandfreier Packung nur eine gerinfügige Annäherung der den Druck ausübenden Elemente bewirkt, während bei einer sogenannten weichen Packung, bei der die Umschließung der Packung nicht vakuumdicht ist, eine merkliche Zusammenpressung bewirkt. Entsprechend dem Ergebnis wird die einwandfreie Packung auf dem Weg 28, die fehlerhafte auf dem Weg 30 weiterbefördert. Die fehlerhafte Packung löst damit die Aussonderung der Packungen aus, die seit der vorhergehenden Prüfung die Anlage verlassen haben, außerdem die der bis zur nächsten Prüfung nachlaufenden Packungen.

In einer zweiten Ausführungsform des Verfahrens wird als Indikator die Veränderung des Zustandes in der Druckkammer 20' benutzt. Hierbei ist an die Kammer 20' ein Druckmeßgerät 26 angeschlossen. Nach Zuführung eines vorbestimmten Druckes über die Leitung 22' in die Kammer 20' wird die Druckzuführung abgeschaltet und der Druckabfall auf dem Meßgerät 26 beobachtet. Falls dieser Druckabfall einen bei einwandfreien Packungen auftretenden, geringfügigen Betrag am Ende der Prüfzeit merklich überschreitet, wird die betreffende Packung auf dem Weg 30 ausgesondert. Anderenfalls läuft die Packung als einwandfrei auf dem Weg 20 weiter.

Statt z. B. jede 30. Packung zu überprüfen, kann auch eine ausreichend große Druckkammer benutzt werden, in der jeweils 30 Packungen unter Druck gesetzt werden können, so daß alle aus der Verpackungseinrichtung kommende Packungen überprüft werden. In der ersten Ausführungsform des Verfahrens werden dann alle Packungen nach Verlassen der Druckkamer abgetastet, in der zweiten Ausführungsform nur dann, wenn ein Druckabfall festgestellt worden ist.

**Patentansprüche**

1. Verfahren zum Prüfen von Vakuumpackungen, jeweils bestehend aus einer bestimmten, im Vakuum mit einer Folie luftdicht umschlossenen Warenmenge, auf Luftdichtheit der Umschließung, dadurch gekennzeichnet, daß die zu prüfende Packung unmittelbar anschließend an ihre Herstellung für eine kurze Zeit einem umgebenden den Innendruck der Packung übersteigenden Gasdruck von etwa 4 bis 25 Bar ausgesetzt und die dadurch bei Durchlässigkeit der Folie auftretende Zustandsänderung als Indikator benutzt wird.

2. Verfahren nach Anspruch 1, gekennzeichnet durch einen Überdruck von etwa 8-16 Bar.

3. Verfahren nach Anspruch 1 oder 2, gekennzeichnet durch eine Einwirkzeit des Druckes von etwa 10 bis 60 Sekunden.

4. Verfahren nach Anspruch 3, gekennzeichnet durch eine Einwirkzeit des Druckes von etwa 15-20 Sekunden.

5. Verfahren nach einem der Ansprüche 1 bis 4, dadurch gekennzeichnet, daß anschließend an die Druckbeaufschlagung zwischen zwei mit einem Meßgerät verbundenen Platten die mechanische Druckfestigkeit der Packung ermittelt wird.

6. Verfahren nach einem der Ansprüche 1 bis 4, dadurch gekennzeichnet, daß die Packung in eine Kammer gelegt wird, in der ein bestimmter Überdruck hergestellt und nach Abschaltung der Druckzufuhr der Druckabfall gemessen wird, der in der Kammer innerhalb einer bestimmten Zeit eintritt.

**Claims**

1. Process for testing the air-tightness of the wrappings of vacuum packages, each of which comprises a certain quantity of goods packaged air-tight and in vacuum in film, characterised in that, the package to be tested is exposed for a short time immediately after its manufacture to a surrounding gas pressure which exceeds the internal pressure of the package by about 4 to 25 bar and the change of state resulting from the permeability of the film is used as an indicator.

2. Process in accordance with Claim 1, characterised in that, an excess pressure of about 8 to 16 bar is used.

3. Process in accordance with Claim 1 or 2, characterised in that, the period of application of pressure is about 10 to 60 seconds.

4. Process in accordance with Claim 3, characterised in that, the period of application of pressure is about 15 to 20 seconds.

5. Process in accordance with one of the Claims 1 to 4, characterised in that, after subjecting the package to pressure, its mechanical resistance to compression is determined between two plates connected to a measuring device.

6. Process in accordance with one of the Claims 1 to 4, characterised in that, the package is placed in a chamber in which a certain excess pressure is generated and, after isolating the source of the pressure, the pressure decrease occuring inside the chamber within a certain period of time is determined.

**Revendications**

1. Procédé pour le contrôle de paquets sous vide, respectivement composés d'une quantité de produits déterminée enveloppée hermétiquement sous vide dans une feuille, ce contrôle concernant l'herméticité de l'enveloppe, caractérisé en ce que le paquet à contrôler est, immédiatement à la suite de sa réalisation, soumis, sur un court intervalle de temps, à une pression gazeuse environnante de 4 à 25 bars surpassant la pression intérieure du paquet et le changement d'état, intervenant alors en cas de perméabilité de la feuille, est utilisé comme indicateur.

2. Procédé selon la revendication 1, caractérisé par une surpression d'environ 8 à 16 bars.

3. Procédé selon la revendication 1 ou 2, caractérisé par un temps d'action de la pression d'environ 10 à 60 secondes.

4. Procédé selon la revendication 3, caractérisé par un temps d'action de la pression d'environ 15 à 20 secondes.

5. Procédé selon l'une des revendications 1 à 4, caractérisé en ce que, à la suite de l'application de la pression, la résistance mécanique du paquet à la compression est déterminée entre deux plaques reliées à un appareil de mesure.

6. Procédé selon l'une des revendications 1 à 4, caractérisé en ce que le paquet est placé dans une chambre, dans laquelle une surpression déterminée est établie et, après la coupure de l'arrivée de pression, la chute de pression, qui se produit dans la chambre à l'intérieur d'un intervalle de temps déterminé, est mesurée.

## Fig. 1

## Fig. 2